# EUROPEAN PATENT SPECIFICATION

(11) **EP 3 812 200 B1**
(45) Date of publication and mention of the grant of the patent: **16.08.2023**
(21) Application number: 20202498.0
(22) Date of filing: 19.10.2020
(51) Int. Cl.: B60L 53/31

(54) **ELECTRICAL CONNECTOR**
ELEKTRISCHER STECKVERBINDER
CONNECTEUR ÉLECTRIQUE

(30) Priority: 25.10.2019 IT 201900019782
(43) Date of publication of application: 28.04.2021
(73) Proprietor: GEWISS S.p.A., 24069 Cenate Sotto (Bergamo) (IT)
(72) Inventor: BOSATELLI, Domenico, 24069 Cenate Sotto (Bergamo) (IT)
(74) Representative: Forattini, Amelia

(56) References cited:
- EP-A1- 3 447 849
- EP-B1- 3 447 849
- WO-A1-2012/059802
- WO-A1-2012/059804
- WO-A1-2018/047582
- JP-A- 2010 088 280
- JP-A- 2012 205 361
- US-A1- 2004 106 313
- US-B2- 9 120 391

## Description

The present invention relates to an electrical connector, particularly a socket outlet for charging electric vehicles.

The socket outlet according to the invention is compliant with the EN 62196 Type 2 standard for power levels up to 22 kW (32A 480V) and ensures an IP XXD rating and an IP55 seal (when the plug is inserted).

As is known, the batteries of electric vehicles are charged by connection to adapted fixed sockets connected to the electrical grid.

Currently commercially available Type 2 connectors are used in sockets, so-called "wall boxes", for charging vehicles in private and public environments, typically in a garage, and in charging points of private, commercial and public parking spaces.

The connectors must comply with the EN 62196 standard, which requires IP XXD protection on the "active contact holes" (phases and neutral), provided by means of systems for disconnection from the electrical grid or by means of shutters.

The EN 62196 standard also provides that the plug must be locked in the outlet, if it is live.

According to the standard, currently commercially available Type 2 connectors are provided with IP XXD protection devices, however, the present connectors do not have the possibility to prevent the intentional insertion of the charging plug.

Commercially available connectors in fact have a simple cover for IP XXD protection.

WO2012059802A1 discloses a function module of charging apparatus for electric vehicle and its charging apparatus. The function module is a display module and has a housing to be stored in the storage space of a stand main body; a display unit for displaying a variety of information pertaining to the charging of an electric vehicle is stored inside the housing. The display means is stored together with the power socket module within a housing that can be stored in the stand main body.

The aim of the present invention is to provide a Type 2 connector that allows to prevent access to the EV socket by unauthorized users.

Within the scope of this aim, an object of the invention is to provide a connector that has a sturdy construction.

A further object of the invention is to provide a connector which, by virtue of its particular constructive characteristics, is capable of giving the greatest assurances of reliability and safety in use.

This aim, these objects and others which will become better apparent hereinafter are achieved by a connector for charging electric vehicles, comprising a casing provided with a front opening and adapted to receive a recessed contacts body, at the rear; said recessed contacts of the recessed contacts body being protected by a pair of shutters which prevent access to said recessed contacts when said shutters are in a closed position; said connector comprising a cover adapted to close said front opening; said cover comprising a lock; said lock comprising a lever which has at least two operating positions: an open position and a closed position; in said closed position, said lever engaging a locking member for locking said shutters, preventing a lifting and opening of said cover; said connector being characterized in that said lever of said lock is operated by means of a key; said connector further comprising a gasket which is mounted on said casing at said front opening; said gasket being compressed by said cover in said closed position; said cover being hinged in a hinge that is integrated in a ring associated with said casing.

Further characteristics and advantages will become better apparent from the description of preferred but not exclusive embodiments of the invention, illustrated by way of non-limiting example in the accompanying drawings, wherein:

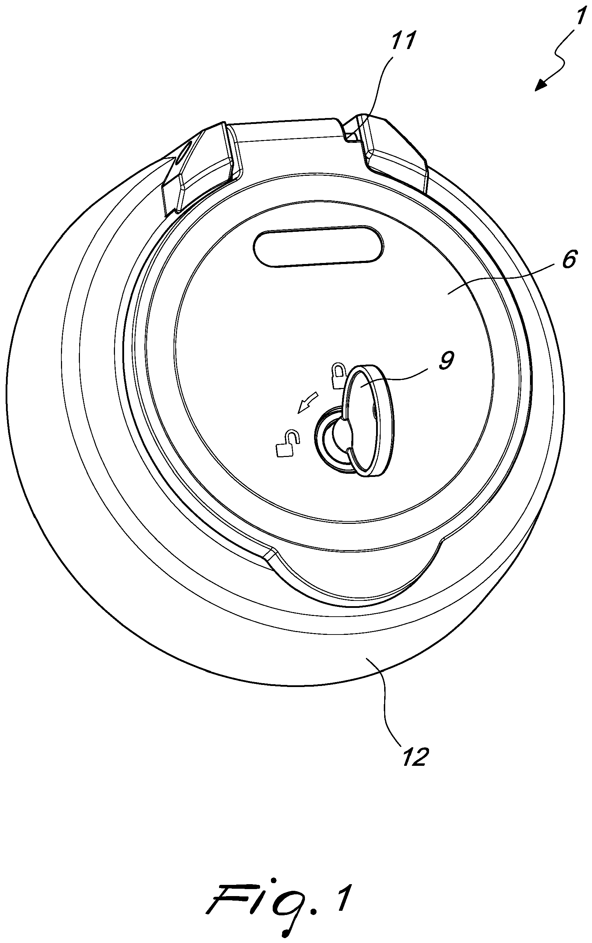

Figure 1 is a perspective view of a connector, for charging electric vehicles, according to the present invention;
Figure 2 is a partially cutout and sectional perspective view of the connector with the cover in the open position;
Figure 3 is a partially cutout and sectional perspective view of the connector with the cover in the closed position.

With reference to the cited figures, the connector according to the invention, generally designated by the reference numeral 1, has a casing 2 provided with a front opening 3 and adapted to receive, at the rear, a recessed contacts body 4. The recessed contacts body 4 is adapted to receive a plug, not visible in the figures, inserted in the front opening 3.

The recessed contacts of the recessed contacts body 4 are protected by a pair of shutters 5 that prevent access to the recessed contacts when shutters are in the closed position.

According to the present invention, the connector has a cover 6 provided with a lock 7 having a lever 8.

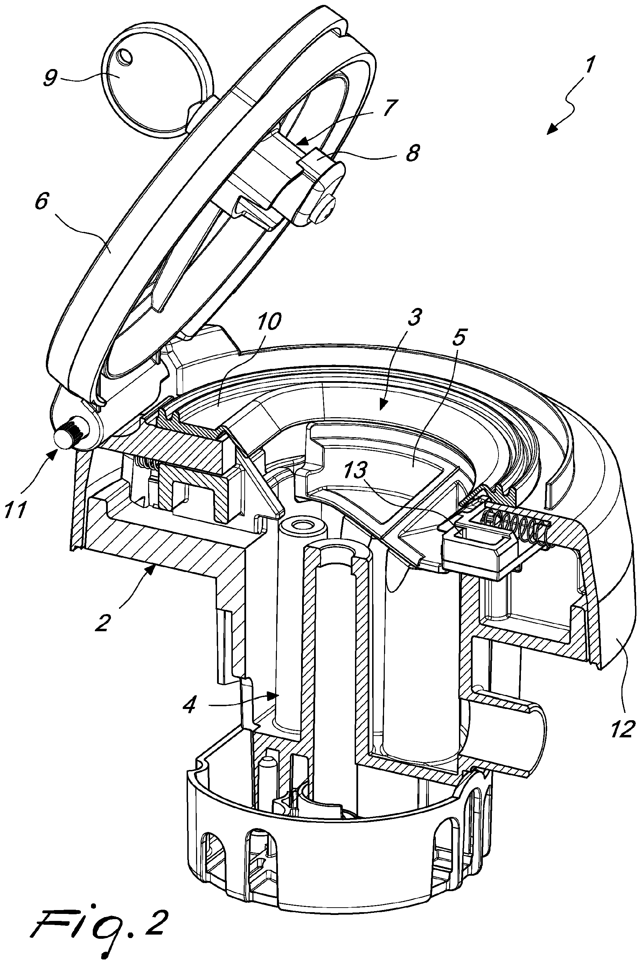

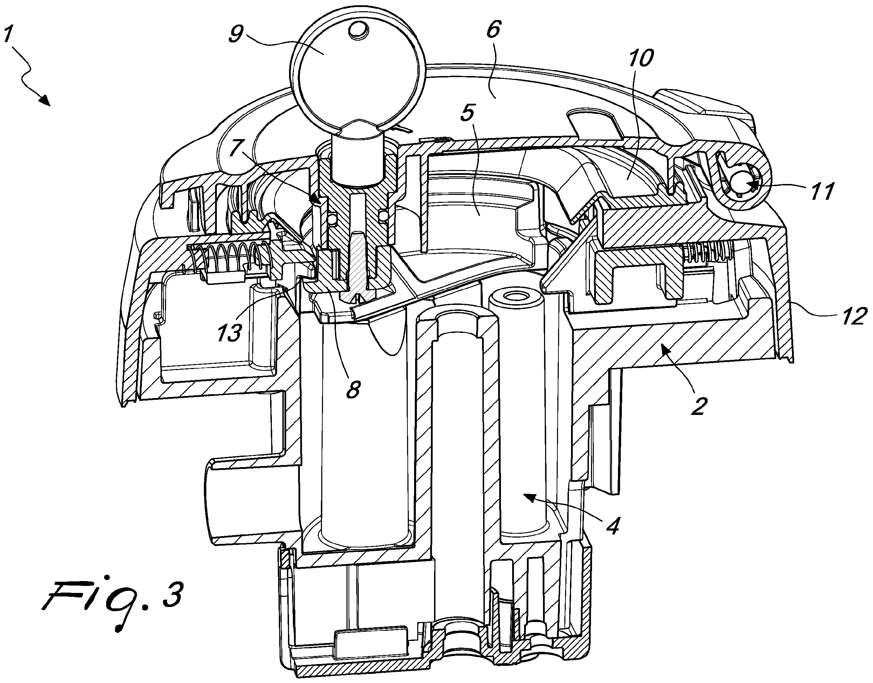

The lever 8 of the lock 7 is operated by means of a key 9 and has at least two active positions: an open position, visible in Figure 2, and a closed position, visible in Figure 3.

In the closed position, the lever 8 engages a locking member 13 for locking the shutters 5, preventing the lifting and opening of the cover 6.

At the front opening 3, the casing 2 has a gasket 10 which is compressed by the cover 6 in the closed position, ensuring the IP55 seal.

The cover 6 is hinged in a hinge 11 which is integrated in a ring 12 associated with the casing 2.

In the closed position, the lever 8 of the lock engages the locking member 13 which locks the shutters; at the same time the locking member 13 constitutes a solid engagement point for the lever 8 of the lock.

In practice it has been found that the invention achieves the intended aim and objects, providing a flush-mount EV connector with an IP55 protection rating, provided with an accessory that has the dual function of locking the shutters and of constituting a solid engagement point for the lever of the lock.

The present invention ensures prevention of access to the EV socket by unauthorized people, differently from currently known sockets, which are provided with a simple cover for IP XXD protection.

The materials used, as well as the dimensions, may be any according to the requirements and the state of the art.

## Claims

1. A connector for charging electric vehicles, comprising a casing (2) provided with a front opening (3) and adapted to receive a recessed contacts body (4) having recessed contacts, at the rear; said recessed contacts of the recessed contacts body (4) being protected by a pair of shutters (5) which prevent access to said recessed contacts when said shutters (5) are in a closed position; said connector comprising a cover (6) adapted to close said front opening (3); said cover (6) comprising a lock (7); said lock (7) comprising a lever (8) which has at least two operating positions: an open position and a closed position; in said closed position, said lever (8) engaging a locking member (13) for locking said shutters (5), preventing a lifting and opening (3) of said cover (6); said connector being **characterized in that** it comprises a ring (12) associated with said casing (2); said connector further comprising a hinge (11) integrated in said ring (12); said cover (6) being hinged at said hinge (11); said connector further comprising a gasket (10) which is mounted on said casing (2) at said front opening (3); said gasket (10) being compressed by said cover (6) in said closed position; said lever (8) of said lock (7) being operated by means of a key (9).

## Patentansprüche

1. Eine Anschlussvorrichtung zum Laden von Elektrofahrzeugen, die ein Gehäuse (2) umfasst, das mit einer vorderen Öffnung (3) versehen und ausgebildet ist, um einen eingelassenen Kontaktkörper (4) aufzunehmen, der an der Rückseite eingelassene Kontakte hat; wobei die eingelassenen Kontakte des eingelassenen Kontaktkörpers (4) durch ein Paar von Klappen (5) geschützt sind, die den Zugriff auf die eingelassenen Kontakte verhindern, wenn die Klappen (5) in einer geschlossenen Position sind; wobei die Anschlussvorrichtung einen Deckel (6) umfasst, der ausgebildet ist, um die vordere Öffnung (3) zu schließen; wobei der Deckel (6) ein Schloss (7) umfasst; wobei das Schloss (7) einen Hebel (8) umfasst, der mindestens zwei Arbeitspositionen hat: eine offene und eine geschlossene Position; wobei in der geschlossenen Position der Hebel (8) in Eingriff mit einem Verriegelungsglied (13) zum Verriegeln der Klappen (5) steht, wodurch ein Anheben und Öffnen (3) des Deckels (6) verhindert wird; wobei die Anschlussvorrichtung **dadurch gekennzeichnet ist, dass** sie einen mit dem Gehäuse (2) verbundenen Ring (12) umfasst; wobei die Anschlussvorrichtung weiter ein Scharnier (11) umfasst, das in den Ring (12) integriert ist; wobei der Deckel (6) gelenkig an dem Scharnier (11) angebracht ist; wobei die Anschlussvorrichtung weiter eine Dichtung (10) umfasst, die an der vorderen Öffnung (3) an dem Gehäuse (2) angebracht ist; wobei die Dichtung (10) in der geschlossenen Position von dem Deckel (6) zusammengedrückt wird; wobei der Hebel (8) des Schlosses (7) mit einem Schlüssel (9) betätigt wird.

## Revendications

1. Connecteur pour recharger des véhicules électriques, comprenant un boîtier (2) pourvu d'une ouverture avant (3) et adapté pour recevoir un corps de contacts renfoncés (4) comportant des contacts renfoncés, à l'arrière; lesdits contacts renfoncés du corps de contacts renfoncés (4) étant protégés par une paire d'obturateurs (5) qui empêchent l'accès auxdits contacts renfoncés quand lesdits obturateurs (5) sont dans une position fermée; ledit connecteur comprenant un couvercle (6) adapté pour fermer ladite ouverture avant (3); ledit couvercle (6) comprenant un verrou (7); ledit verrou (7) comprenant un levier (8) qui comporte au moins deux positions de fonctionnement: une position ouverte et une position fermée; dans ladite position fermée, ledit levier (8) s'engageant avec un élément de verrouillage (13) pour verrouiller lesdits obturateurs (5), ce qui empêche un soulèvement et une ouverture (3) dudit couvercle (6); ledit connecteur étant **caractérisé en ce qu'**il comprend une bague (12) associée audit boîtier (2); ledit connecteur comprenant en outre une charnière (11) intégrée dans ladite bague (12); ledit couvercle (6) étant articulé au niveau de ladite charnière (11); ledit connecteur comprenant en outre un joint (10) qui est monté sur ledit boîtier (2) à ladite ouverture avant (3); ledit joint (10) étant comprimé par ledit couvercle (6) dans ladite position fermée; ledit levier (8) dudit verrou (7) étant actionné au moyen d'une clé (9).
